# EUROPÄISCHE PATENTANMELDUNG

(11) **EP 1 684 035 A2**
(43) Veröffentlichungstag der Anmeldung: **26.07.2006**
(21) Anmeldenummer: 06100493.3
(22) Anmeldetag: 18.01.2006
(51) Int. Cl.: F25C 1/12

(54) **Vorrichtungen zur Eisspeicherung und Direktkühlung**

(30) Priorität: 24.01.2005 DE 102005003259
(71) Anmelder: Haslinger, Franz, 84529 Tittmoning (DE)
(72) Erfinder: Haslinger, Franz, 84529 Tittmoning (DE)

(57) **Zusammenfassung**

Die vorliegende Erfindung betrifft eine Eisspeichervorrichtung und eine Vorrichtung zur Direktkühlung, bei welcher ein mit Wasser gefüllter Behälter von zumindest einem Rohr (4) durchsetzt ist, in welchem Kältemittel zur Anlagerung von Eis an einer Mantelfläche (9) des Rohrs (4) oder zur Kühlung des in dem Behälter befindlichen Wassers fließt. Die Mantelfläche (9) des Rohrs (4) ist mit Flächenelementen (10) zur Anbindung für das Eis bzw. zur Vergrößerung der Wärmeübergangsflächen versehen.

## Beschreibung

Die vorliegende Erfindung betrifft eine Eisspeichervorrichtung nach dem Oberbegriff des Patentanspruchs 1 und eine Vorrichtung zur Direktkühlung eines Mediums nach dem Oberbegriff des Patentanspruchs 2.

Eisspeicheranlagen sind Latentspeicher, die Kälteenergie in Form von Eis beim Phasenübergang von Wasser auf Eis speichern, dem so genannten "Laden". Beim anschließenden "Entladen" wird diese Kälteenergie durch Abtauen des Eises wieder an das Kältenetz abgegeben. Durch die Eisspeicherung können schwankende Energiespitzen abgedeckt werden. In der Regel werden das Laden nachts und das Entladen tagsüber durchgeführt, sodass die täglichen Kühllastspitzen durch das Eisspeichersystem gedeckt werden.

Vorrichtungen zur Direktkühlung kommen zum Einsatz, um ein zu kühlendes Medium, vorzugsweise Wasser zu kühlen, welches in einem separaten Verbrauchernetz zirkuliert.

Sowohl Vorrichtungen zur Eisspeicherung als auch Vorrichtungen zur Direktkühlung kommen vorwiegend in der Klimatechnik, wo sie zur Klimatisierung von Gebäuden herangezogen werden, und in Prozesskälteanlagen, welche eine entsprechende Kühlleistung für die Nahrungsmittelzubereitung, insbesondere von Milch- und Käseprodukten, bereitstellen, zum Einsatz. Weitere Haupteinsatzgebiete liegen in der Bereitstellung einer Prozesskälte für die chemische Industrie, Pharmaindustrie, Brauereien usw..

Der Grundaufbau einer Eisspeichervorrichtung und der Grundaufbau einer Vorrichtung zur Direktkühlung sind prinzipiell ähnlich. Diese bestehen in der Regel aus einem mit Wasser gefülltem Behälter, in welchem ein Rohrbündelsystem angeordnet ist und diesen Behälter wendel-, stapel- oder spiralförmig durchsetzt. In den Rohren des Rohrbündels wird im Kreislauf in der Regel ein Kältemittel, wie beispielsweise Ammoniak, Frigen usw., oder ein Kälteträger in der Form eines Wasser-Glykolgemisches (Sole), geführt. Die Rohre des Rohrbündels stehen mit einer Kältemaschine in Verbindung, wobei die Eisspeichervorrichtung oder die Vorrichtung zur Direktkühlung zu der Kältemaschine entweder in Serien- oder Parallelschaltung angeordnet sein können. Diese Vorrichtungen werden in der Regel jeweils zwischen einem Verdampfer der Kälteanlage und einem Verbraucher- bzw. Kaltwassernetz angeordnet.

In dem Verdampfer der Kälteanlage wird das Kältemittel oder die Sole (Kälteträger) auf beispielsweise -5°C abgekühlt und durchströmt dann das Rohrbündel im Inneren des Behälters, was bewirkt, dass das Wasser im Behälter ebenfalls entsprechend abgekühlt wird. Vorzugsweise ist das Rohrbündelsystem derart angeordnet, dass das Kältemittel oder der Kälteträger die Rohre in einem Gegenstromprinzip durchströmt.

Bei der Eisspeichervorrichtung ist es der Zweck, dass sich durch das Gefrieren von Wasser Eis zuerst an der Mantelfläche der Rohre ausbildet und sich dort anlagert. Die volle Speicherkapazität der Eisspeichervorrichtung ist erreicht, wenn die gesamte Wassermenge im Behälter bzw. Tank gefroren ist oder eine Eisstärkenmeßanlage den Ausschaltbefehl gibt. Die Entnahme der Kälteleistung, d.h. das Entladen, erfolgt im umgekehrten Sinn. Hierbei kann zum einen durch das Rohrbündel Sole (Kälteträger) mit einer abzukühlenden Temperatur geführt werden. Hierdurch schmilzt an der Mantelfläche der Rohre das Eis und kühlt damit über die Abgabe der Schmelzwärme die Sole. Bei Systemen mit Kältemittel im Rohrbündel kann zum anderen die Entladung über einen warmen Wasserrücklauf direkt im Becken erfolgen. Die Eisspeichervorrichtung ist vollständig entladen, wenn kein Eis mehr im Behälter vorhanden ist.

Ein Beispiel einer Eisspeichervorrichtung zeigt die europäische Offenlegungsschrift EP 0 927 861 A1. In dieser sind zur Erhöhung der Effizienz mehrere Wärmetauscher vorgesehen, wobei sich ein Wärmetauscher im Inneren des Eisspeichertanks befindet und aus U-förmig geschwungenen und parallel zueinander angeordneten zylindrischen Rohren gebildet ist, durch welche der Kälteträger fließt, um Eis an der zylindrischen Mantelfläche der Rohre anzubinden.

Bei Eisspeichervorrichtungen wird zwischen Vollspeicherung und Teilspeicherung unterschieden. Bei einer Vollspeicherung wird beispielsweise der Kältebedarf eines Gebäudes ausschließlich durch die Leistung des Eisspeichers gedeckt, ohne das während der Kühlphase eine Kältemaschine zum Einsatz kommt. Die Kältemaschine dient ausschließlich zur Ladung des Eisspeichers insbesondere während der Nachtstunden, in denen das Gebäude nicht entsprechend klimatisiert werden muss. Bei einer Teilspeicherung wird die Grundlast durch die Kältemaschine gedeckt, während die Eisspeichervorrichtung lediglich zur Abdeckung einer möglicherweise auftretenden Spitzenlast herangezogen wird.

Bei dem aus dem Stand der Technik hinlänglich bekannten Eisspeichervorrichtungen wird in der Regel über die Mantelfläche eines Rohrs symmetrisch Eis angespeichert, was bis zu einer Dicke von 40mm und mehr erfolgen kann.

Je mehr Eis jedoch angespeichert wird, desto schlechter entwickelt sich der Wirkungsgrad des Gesamtsystems, da bedingt durch die höhere Eismenge und Eisoberfläche eine höhere Entladeleistung beim Abtauen notwendig wird. Bei Systemen, in welchen ein Kältemittel zum Einsatz kommt, ist bedingt durch die höhere Eisdicke und Eisoberfläche eine tiefere Verdampfungstemperatur beim Aufeisen notwendig. In entsprechender Weise vermindert sich diese Entladeleistung wieder, wenn die Dicke des angelagerten Eises abnimmt bzw. die Eisoberfläche geringer wird.

Ausgehend von den aus dem Stand der Technik bekannten Nachteilen ist es eine Aufgabe der vorliegenden Erfindung, eine Eisspeichervorrichtung bereitzustellen, welche einen besseren Wirkungsgrad beim Laden und Entladen bereitstellt.

Im Gegensatz zu den Eisspeichervorrichtungen müssen bei den Vorrichtungen zur Direktkühlung der energetische Ausgleich zwischen dem Kältemittel und dem Wasser einerseits und der Durchsatz des aus dem Behälter abzuführenden, dann gekühlten Wassers andererseits derart bewerkstelligt werden, dass im Betrieb der Vorrichtung eine Entstehung von Eis an der Mantelfläche der Rohre grundsätzlich verhindert wird.

Bei den aus dem Stand der Technik bekannten Anlagen, in welchen ein Rohrbündelsystem den oder die Behälter durchsetzt, ist jedoch das Problem aufgetreten, dass sich unter bestimmten Bedingungen dennoch Eis an der Mantelfläche ausbildet, da die Abstände zwischen den Rohren bzw. Rohrbündeln, zwischen den das Wasser fließt, zu klein sein können. Diese Gefahr des Zusammenfrierens führt zu einer Senkung des Wirkungsgrads und schlimmstenfalls zum Ausfall der Vorrichtung zur Direktkühlung, wenn auf Grund des vollständigen Zusammenfrierens kein Wasser mehr zwischen den Rohren fließen kann.

Ausgehend von den aus dem Stand der Technik bekannten Nachteilen ist es eine andere Aufgabe der vorliegenden Erfindung, eine Vorrichtung zur Direktkühlung bereitzustellen, welche einen besseren Wirkungsgrad beim Kühlen bereitstellt.

Für eine Eisspeichervorrichtung wird die entsprechende Aufgabe mit den Merkmalen des Patentanspruchs 1 und für eine Vorrichtung zur Direktkühlung wird die entsprechende Aufgabe mit den Merkmalen des Patentanspruchs 2 gelöst.

Der Kern der Erfindung sowohl für den Anwendungsfall einer Eisspeichervorrichtung als auch für den Anwendungsfall einer Vorrichtung zur Direktkühlung liegt demzufolge darin, dass das den jeweiligen Behälter durchsetzende Rohr, in welchem das Kältemittel durch den Behälter geführt wird, derart ausgebildet ist, dass dessen Mantelfläche Flächenelemente aufweist.

Bei einer Eisspeichervorrichtung dienen diese Flächenelemente als Anbindungselemente für das Eis, während bei einer Vorrichtung zur Direktkühlung derartige Flächenelemente als Kontaktflächen für den Kälteübergang dienen, welche die Gesamtkontaktfläche zwischen dem Medium bzw. dem Wasser und dem Rohr erhöhen.

Grundsätzlich wird unabhängig von der Ausgestaltung der erfindungsgemäßen Flächenelemente eine größere Oberfläche geschaffen, was für Verwirblungen sorgt.

Durch bessere Verwirblungen um diese Flächenelemente ergibt sich ein höherer Wärmedurchgangskoeffizient (k-Wert) und damit einhergehend ein besserer Wärmeübergang zwischen der in den Rohren strömenden Sole oder dem Kältemittel und dem diese umgebenden Wasser bzw. Medium in dem Behälter.

Während sich bei einer Eisspeichervorrichtung beim Ladeprozess um ein Glattrohr, welches in herkömmlichen Eisspeichervorrichtungen verwendet wird, relativ rasch ein Eispelz auf dessen Mantelfläche ausbildet, welche den Wärmeübergang beeinflusst, bildet sich dieser bei einem mit entsprechenden Profilen bzw. Flächenelementen versehenen Rohr gemäß der Erfindung relativ spät aus, mit dem Vorteil, dass für eine längere Zeitdauer ein besserer Wärmeübergang realisiert wird.

Damit einhergehend ist der Wirkungsgrad einer Eisspeichervorrichtung gemäß der Erfindung bei vergleichbarer Eisstärke wesentlich besser als in einem herkömmlichen System mit Glattrohren. Ebenso vermindert sich die Entladeleistung beim Entladeprozess bei weitem nicht so stark wie bei einem herkömmlichen Eisspeichersystem, da ab einer bestimmten Eisstärke bei abnehmender Eisdicke durch die Anbindung an die Flächenelemente die Eisoberfläche wellig wird. Eine wellige Eisoberfläche führt jedoch zu einer insgesamt größeren Eisoberfläche, wodurch sich die Entladeleistung erhöht.

Ein weiterer Vorteil einer mit derartigen Rohren ausgestatteten Eisspeichervorrichtung liegt darin, dass bei einer vergleichbaren Leistung der Platzbedarf im Vergleich zu herkömmlichen Systemen mit Glattrohren annähernd halb so groß ist. Der energetische Vorteil gegenüber diesen Systemen liegt im Bereich von bis zu 25%.

Bei einer Vorrichtung zur Direktkühlung ist der Einsatz solcher Rohre gemäß der Erfindung mit dem Vorteil verbunden, dass der Abstand zwischen den einzelnen Rohren eines Rohrbündels bei gleich bleibendem Leistungsbedarf größer sein kann, wodurch die Gefahr des Zusammenfrierens vermieden wird.

Damit einhergehend ist der Wirkungsgrad einer Vorrichtung zur Direktkühlung gemäß der Erfindung bei vergleichbarer Behältergröße wesentlich besser als in einem herkömmlichen System mit Glattrohren. Der energetische Vorteil gegenüber diesen Systemen liegt ebenfalls in einem Bereich von bis zu 25%. Bei gleicher Baugröße kann die Leistung bis auf das 3-fache gegenüber herkömmlichen Systemen gesteigert werden.

Zu Zwecken einer Leistungserhöhung bzw. Optimierung können vorhandene Eisspeichervorrichtungen und Vorrichtungen zur Direktkühlung, welche bisher Glattrohre verwenden, ohne große Umbaumaßnahmen durch Austausch der Rohre und Einbau der erfindungsgemäßen Rohre nachträglich umgerüstet werden.

Die mit den Flächenelementen versehenen Rohre können prinzipiell auch in Hybrid-Eisspeichervorrichtungen eingesetzt werden. Im Tagbetrieb kann die Vorrichtung ausschließlich zur Vor- bzw. Direktkühlung eingesetzt werden, während im Nachtbetrieb die gleiche Vorrichtung als Eisspeicheranlage dienen kann. Dies geschieht beispielsweise dadurch, dass im Nachtbetrieb kein gekühltes Wasser mehr abgeführt wird. Eis bildet sich dann an den Flächenelementen der Rohre an. Die Vorrichtung arbeitet dann als Latentspeicher, die Kälteenergie in Form von Eis zu speichern vermag, welche dann wieder durch Abtauen des Eises an das Verbrauchernetz abgegeben werden kann.

Die Flächenelemente gemäß der Erfindung erstrecken sich im Wesentlichen radial von der Mantelfläche des Rohrs nach außen in den Behälter. Diese Flächenelemente können sich entweder über die gesamte Rohrlänge innerhalb des Behälters erstrecken oder sind lediglich abschnittsweise auf dem Rohr vorgesehen.

Gemäß der Erfindung können die Flächenelemente als Lamellen ausgebildet sein. Hierbei lassen sich gemäß der Erfindung zwei unterschiedliche Ausführungen unterscheiden.

In einer ersten Ausführungsform sind die Lamellen, vergleichbar einem Rippenrohr, zueinander in paralleler Anordnung auf dem Rohr in Axialrichtung, vorzugsweise in äquidistanten Abständen, angeordnet. In einer zweiten Ausführungsform erstrecken sich die Lamellen entlang des Rohres in dessen Axialrichtung und sind vorzugsweise umfänglich in äquidistanten Abständen angeordnet.

Eine weitere Möglichkeit besteht darin, zumindest eine Lamelle spiralförmig um die Mantelfläche des Rohrs herum verlaufen zu lassen.

Durch die unterschiedlichen Ausgestaltungen mit Lamellen werden beim Einsatz in Eisspeichervorrichtungen entsprechend größere Anbindungsflächen für das Eis bereitgestellt. Bei einer Vorrichtung zur Direktkühlung bieten diese Lamellen größere Kontaktflächen für den Kälteübergang zwischen dem Kältemittel und dem Wasser.

In einer weiteren Ausführungsform gemäß der Erfindung sind die Flächenelemente als radiale Vorsprünge bzw. Finger ausgebildet, welche sich radial von der Manteloberfläche der Rohrs in den Behälter erstrecken.

Diese Finger können in äquidistanten Abständen zueinander angeordnet oder zueinander axial versetzt sein. Darüber hinaus können diese Finger unterschiedliche Längen aufweisen und sich wellenförmig oder spiralförmig erstrecken.

In einer noch weiteren Ausführungsform gemäß der Erfindung sind die Flächenelemente als Lamellen ausgebildet, wobei sich Lamellen axial und weitere Lamellen hierzu radial erstrecken, sodass sich ein Gitter auf der Mantelfläche des Rohrs ausbildet, welches radial nach außen hin offen ist, wobei sich bei einer Eisspeichervorrichtung das Eis in den einzelnen Abschnitten des Gitters anlagern kann.

In einer besonders bevorzugten Ausführungsform gemäß der Erfindung kann der Behälter der Eisspeichervorrichtung oder der Vorrichtung zur Direktkühlung in mehrere Segmente unterteilt sein. Hierdurch wird u. a. die Blockeisbildung minimiert, was auch bei Eisspeichervorrichtungen unerwünscht ist. Eine Unterteilung in Segmente führt letztendlich zu einer Optimierung der Energieeffizienz bei beiden beschriebenen Systemen. Gemäß der Erfindung kann diese Effizienz noch weiter erhöht werden, indem die einzelnen Segmente je nach Bedarf mit unterschiedlich ausgestalteten Flächenelementen ausgestattet sein können. Hierdurch lässt sich entlang der Abführrichtung des Kältemittels in den Rohren eine unterschiedliche energetische Verteilung realisieren.

Vorzugsweise können eines oder mehrere Segmente im Tagbetrieb ausschließlich der Direktkühlung dienen, während die übrigen Segmente im Nachtbetrieb ausschließlich die Funktion einer Eisspeicherung übernehmen.

Die Erfindung soll nun im Folgenden anhand der in den beiliegenden Zeichnungen dargestellten Ausführungsbeispiele näher erläutert werden. Es zeigen:
- Figur 1: in einer Seitenansicht exemplarisch eine Eisspeichervorrichtung oder eine Vorrichtung zur Direktkühlung;
- Figur 2: in perspektivischer Ansicht ein Rohr in einer ersten Ausführungsform zur Verwendung in einer Eisspeichervorrichtung oder einer Vorrichtung zur Direktkühlung gemäß der Erfindung;
- Figur 3: in Querschnittsdarstellung dieses Rohr mit angelagertem Eis im Vollspeicherzustand in einer Eisspeichervorrichtung gemäß der Erfindung;
- Figur 4: das in Figur 3 gezeigte Rohr während des Entladens;
- Figur 5: perspektivisch ein Rohr in einer zweiten Ausführungsform zur Verwendung in einer Eisspeichervorrichtung oder einer Vorrichtung zur Direktkühlung gemäß der Erfindung;
- Figur 6: im Axialschnitt das in Figur 5 gezeigte Rohr;
- Figur 7: perspektivisch ein Rohr in einer dritten Ausführungsform zur Verwendung in einer Eisspeichervorrichtung oder einer Vorrichtung zur Direktkühlung gemäß der Erfindung;
- Figur 8: perspektivisch ein Rohr in einer vierten Ausführungsform zur Verwendung in einer Eisspeichervorrichtung oder einer Vorrichtung zur Direktkühlung gemäß der Erfindung; und
- Figur 9: perspektivisch ein Rohr in einer fünften Ausführungsform zur Verwendung in einer Eisspeichervorrichtung oder einer Vorrichtung zur Direktkühlung gemäß der Erfindung.

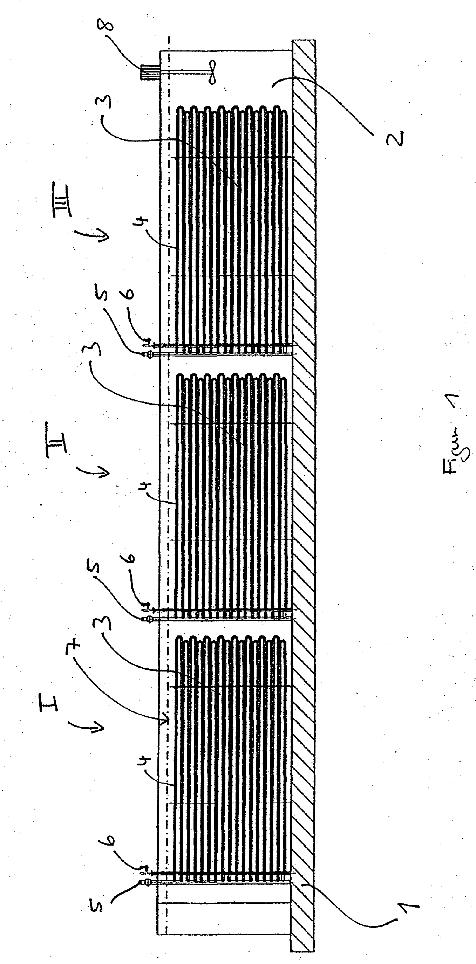

In Figur 1 ist exemplarisch in Querschnittsdarstellung ein Aufbau gezeigt, welcher sowohl als Eisspeichervorrichtung als auch als Vorrichtung zur Direktkühlung zur Anwendung kommen kann.

Dieser Aufbau besteht aus einem Becken bzw. Behälter 1, welcher mit Wasser 2 gefüllt ist. Der Behälter 1 ist in drei Zonen I, II und III unterteilt. Jede Zone I, II und III weist jeweils ein Rohrbündel 3 auf, welches aus einem einzigen Rohr 4 besteht, welches zur Verwirklichung eines Gegenstromprinzips stapelartig in dem Behälter 1 angeordnet ist.

Das Rohr 4 steht jeweils mit einem Zulauf 5 für ein Kältemittel oder einen Kälteträger von einer nicht dargestellten Kälteanlage und einem Ablauf 6 in Verbindung. Für eine Vorrichtung zur Direktkühlung würde der Behälter 1 wiederum mit einem nicht dargestellten Verbrauchernetz in Verbindung, zu welchem das gekühlte Wasser 2 aus dem Behälter 1 dann zugeführt wird. Anstelle des Wassers kann auch Sole in dem Behälter 1 eingesetzt werden.

Wie zu erkennen ist, befinden sich die Rohrbündel 3 stets unterhalb einer Flüssigkeitslinie 7. In dem Behälter 1 ist des Weiteren ein Rührwerk 8 angeordnet, welches zur besseren Umwälzung des Wassers 2 während des Entladeprozesses dient.

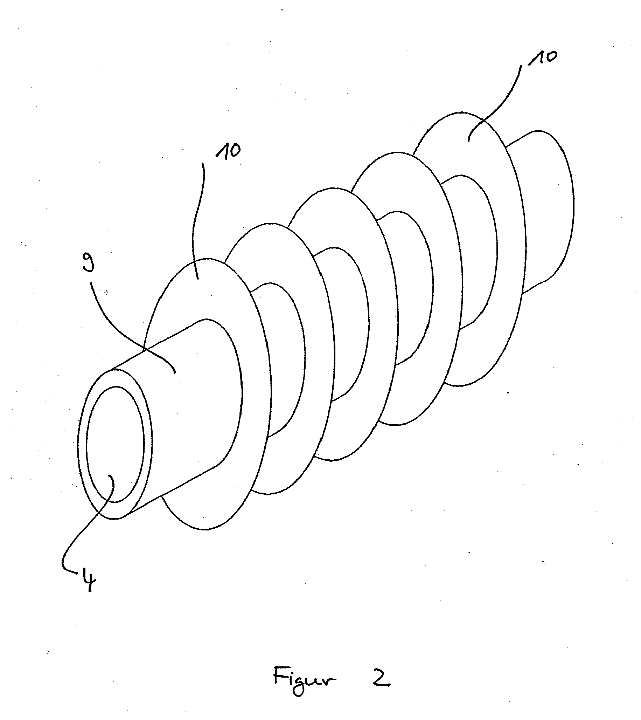

In Figur 2 ist eine erste Ausführungsform eines Rohrs 4 gezeigt, welches in dem in Figur 1 gezeigten Behälter 1 entweder für eine Eisspeichervorrichtung oder für eine Vorrichtung zur Direktkühlung zum Einsatz kommen kann.

Dieses Rohr 4 dient der Führung des Kältemittels und weist auf seiner Mantelfläche 9 Flächenelemente in Form von Lamellen 10 auf.

In dieser Ausführungsform sind die Lamellen 10 als kreisförmige Scheiben angeordnet, welche parallel zueinander in gleichen Abständen in Rohraxialrichtung vorgesehen sind. Die Lamellen 10 sind auf der Mantelfläche 9 des Rohrs 4 durch eine formschlüssige Verbindung, vorzugsweise durch eine Schweißverbindung, befestigt.

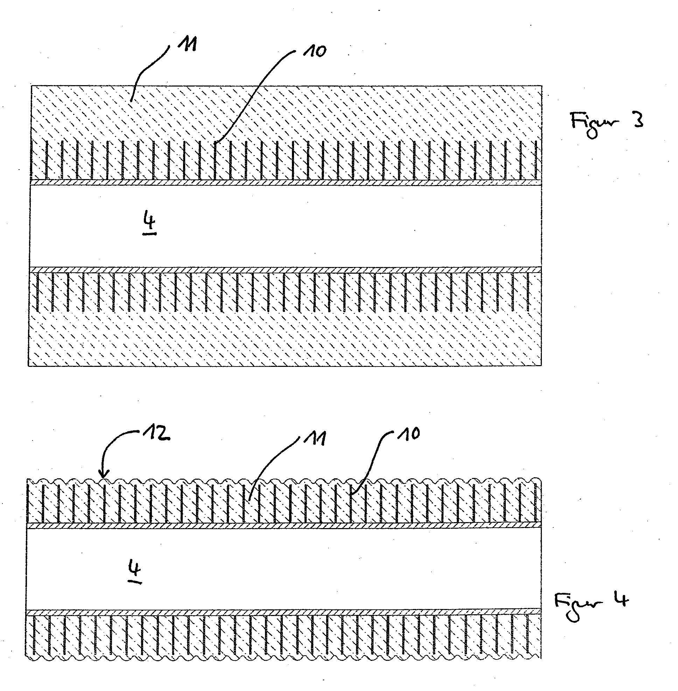

In Figur 3 ist in Querschnittsdarstellung exemplarisch der Einsatz des Rohrs 4 in einer Eisspeichervorrichtung gezeigt. In den Zwischenräumen zwischen den Lamellen 10 und radial um diese außen herum setzt sich Eis 11 an, wodurch die Kälte gespeichert wird.

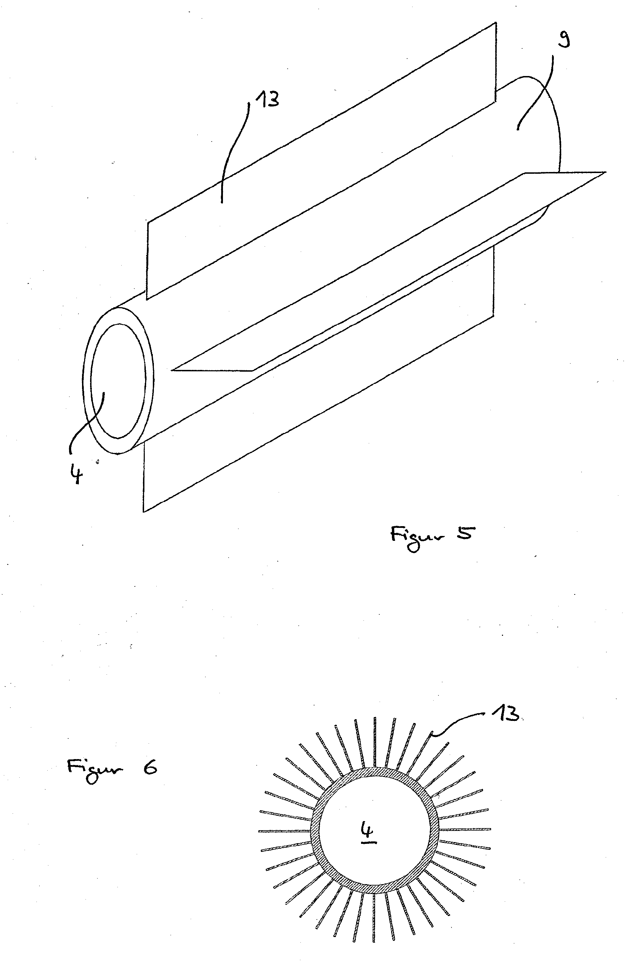

In Figur 4 ist ein Zustand während des Entladens des Eises 11 gezeigt. Je nach Abstand zwischen den Lamellen 10 bildet sich beim Entladen, wie zu erkennen ist, eine wellige Oberfläche 12 des Eises 11 aus, was im Vergleich zu einer reinen zylindrischen Eisoberfläche eine größere Oberfläche bietet und damit eine höhere Entladeleistung bereitstellt.

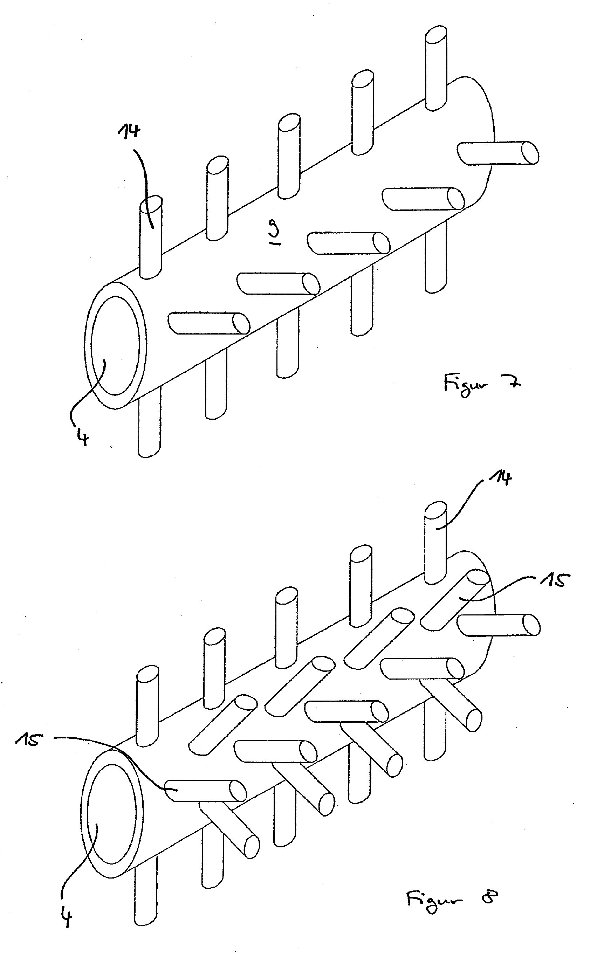

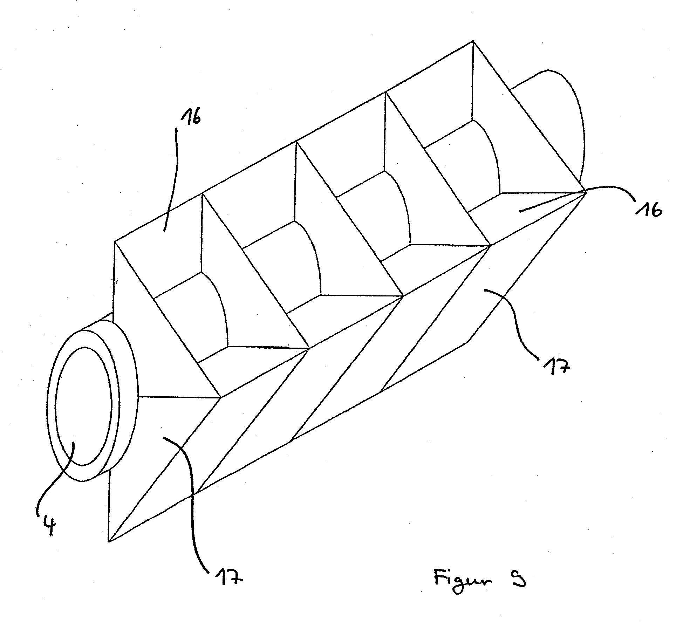

Sowohl dieser für Eisspeichervorrichtungen gemäß der Erfindung gewünschte Eisanbindungseffekt als auch der für Vorrichtungen zur Direktkühlung gewünschte Kühleffekt werden auch mit einem Rohr 4 erzielt, welches, wie in Figur 5 gezeigt, Lamellen 13 auf seiner Mantelfläche 9 aufweist, welche sich in Axialrichtung des Rohrs 4 erstrecken. Die Lamellen 13 sind umfänglich in gleichen Abständen vorgesehen, wie dies aus der Querschnittsdarstellung der Figur 6 zu erkennen ist.

Beim Einsatz in einer Eisspeichervorrichtung kann zwischen diesen axialen Lamellen 13 beim Entladeprozess ebenfalls eine größere Eisoberfläche durch Bildung einer Welligkeit entstehen.

In Figur 7 ist eine weitere Ausführungsform eines Rohrs 4 zur Verwendung in beiden Vorrichtungstypen gezeigt. Bei diesem Rohr sind auf der Mantelfläche 9 Vorsprünge in Form von Fingern 14 angeordnet, welche sich radial erstrecken. Die Finger 14 sind sowohl in Radial- als auch in Axialrichtung in gleichen Abständen zueinander vorgesehen.

Es ist jedoch auch möglich, dass die Finger zueinander radial und/oder axial versetzt sind. In Figur 8 eine solche Ausführungsform gezeigt, bei welcher weitere Finger 15 vorgesehen sind, welche gegenüber den Fingern 14 radial und axial versetzt sind.

Die Finger können auf der Mantelfläche 9 des Rohrs 4 entweder durch kraftschlüssige oder formschlüssige Verbindung befestigt sein.

In Figur 9 ist eine fünfte Ausführungsform eines Rohrs 4 gezeigt. Auf der Mantelfläche 9 es Rohrs 4 sind sowohl axiale Lamellen 16 als auch radiale Lamellen 17 in bestimmten Abständen zueinander vorgesehen. Die Lamellen 16 und 17 schneiden sich und stehen miteinander in Verbindung, sodass sich eine Gitterstruktur ausbildet, welche nach außen radial offen ist.

Als Werkstoffe sowohl für das Rohr 4 als auch für die einzelnen Flächenelemente können Edelstähle, feuerverzinkter Stahl, Stahl oder Kunststoff zum Einsatz kommen. Denkbar sind auch Aluminium, Titan oder Buntmetalle sowohl für die Flächenelemente als auch das Trägerrohr. Je nach Anwendungsfall ist es auch möglich, unterschiedliche Werkstoffe für die Flächenelemente einerseits und das Trägerrohr andererseits miteinander zu kombinieren.

### Bezugszeichenliste:

- 1: Behälter
- 2: Wasser
- 3: Rohrbündel
- 4: Rohr
- 5: Zulauf
- 6: Ablauf
- 7: Flüssigkeitslinie
- 8: Rührwerk
- 9: Mantelfläche
- 10: Lamellen
- 11: Eis
- 12: wellige Eisoberfläche
- 13: Lamellen
- 14: Finger
- 15: Finger
- 16: axiale Lamellen
- 17: radiale Lamellen
- I, II, III: Zonen des Behälters

## Patentansprüche

1. Vorrichtung zur Eisspeicherung mit einem Behälter (1) zur Aufnahme von Wasser (2) und mit zumindest einem den Behälter (1) durchsetzendes Rohr (4) zur Führung eines Kältemittels, wobei in dem Behälter (1) an einer Mantelfläche (9) des Rohrs (4) Eis (11) gebildet wird, wenn das Kältemittel in dem Rohr (4) verdampft wird, **dadurch gekennzeichnet, dass** die Mantelfläche (9) des Rohrs (4) Flächenelemente (10,13,14,15,16,17) für die Eisbildung aufweist.

2. Vorrichtung zur Direktkühlung eines zu kühlenden Mediums, vorzugsweise von Wasser, für ein Verbrauchernetz mit einem Behälter (1) zur Aufnahme des Mediums (2), aus welchem dieses bei Bedarf entnehmbar ist, um dem Verbrauchernetz zugeführt zu werden, und mit zumindest einem dem Behälter (1) durchsetzendes Rohr (4) zur Führung eines Kältemittels, wobei das Medium (2) in dem Behälter (1) gekühlt wird, wenn das Kältemittel in dem Rohr (4) verdampft wird, **dadurch gekennzeichnet, dass** die Mantelfläche (9) des Rohrs (4) Flächenelemente (10,13,14,15,16,17) für die Kühlung aufweist.

3. Vorrichtung nach Anspruch 1 oder nach Anspruch 2, bei welcher sich die Flächenelemente (10,13,14,15,16,17) im Wesentlichen radial von der Mantelfläche (9) weg erstrecken.

4. Vorrichtung nach Anspruch 3, bei welcher die Flächenelemente (10,13,14,15,16,17) zumindest abschnittsweise vorgesehen sind.

5. Vorrichtung nach Anspruch 3 oder 4, bei welcher die Flächenelemente als Lamellen (10,13) ausgebildet sind.

6. Vorrichtung nach Anspruch 5, bei welcher die Lamellen (10) in Rohraxialrichtung in äquidistanten Abständen angeordnet sind.

7. Vorrichtung nach Anspruch 5, bei welcher sich die Lamellen (13) in Rohraxialrichtung erstrecken.

8. Vorrichtung nach Anspruch 7, bei welcher die Lamellen (13) in Rohrradialrichtung in äquidistanten Abständen angeordnet sind.

9. Vorrichtung nach Anspruch 6, 7 oder 8, bei welcher die Lamellen spiralförmig um die Mantelfläche (9) des Rohrs (4) verlaufen.

10. Vorrichtung nach Anspruch 3 oder 4, bei welcher die Flächenelemente als radiale Finger (14,15) ausgebildet sind.

11. Vorrichtung nach Anspruch 10, bei welcher die Finger (14,15) in äquidistanten Abständen angeordnet sind.

12. Vorrichtung nach Anspruch 10 oder 11, bei welcher die Finger (14,15) zueinander axial versetzt sind.

13. Vorrichtung nach Anspruch 10, 11 oder 12, bei welcher die Finger (14,15) wellenförmig oder spiralförmig ausgebildet sind.

14. Vorrichtung nach Anspruch 3 oder 4, bei welcher die Flächenelemente durch sich axial erstreckende Lamellen (16) und sich radial erstreckende Lamellen (17) unter Ausbildung eines radial nach außen offenen Gitters ausgebildet sind.

15. Vorrichtung nach einem der Ansprüche 3 bis 14, bei welcher der Behälter (1) in mehrere Segmente (I,II,III) unterteilt ist.

16. Vorrichtung nach Anspruch 15, bei welcher die Flächenelemente (10,13,14,15,16,17) in den einzelnen Segmenten (I, II, III) unterschiedlich ausgebildet sind.
